# EUROPEAN PATENT APPLICATION

(11) **EP 1 070 627 A2**
(43) Date of publication of application: **24.01.2001**
(21) Application number: 00108959.8
(22) Date of filing: 27.04.2000
(51) Int. Cl.: B60N 2/14

(54) **Front seat assembly for vehicle**

(30) Priority: 23.07.1999 KR 9929958
(71) Applicant: KIA MOTORS CORPORATION, 423-701 Kyonggi-do (KR)
(72) Inventor: Kim, Sang-Ho, Inchon-shi, 402-022 (KR)
(74) Representative: Viering, Jentschura & Partner

(57) **Abstract**

Disclosed is a rotatable front seat assembly for a vehicle, which is constructed in such a manner as to prevent noise from being generated and its durability from being deteriorated due to the presence of gaps between a pair of leg parts and a rotating plate, when loads are exerted to a rotatable front seat in a forward and rearward direction and/or in a leftward and rightward direction, with the pair of leg parts connecting the rotating plate to a pair of slide rails. In the front seat assembly for a vehicle, the rotating plate is supported by the pair of leg parts. The rotating plate is connected through the pair of leg parts to the pair of slide rails which are secured to a floor panel of a vehicle body. The rotatable front seat is rotatably supported by the rotating plate. A bolt passes through a hole which is defined in the rotating plate, and a pair of nuts are locked to the bolt over and under the rotating plate, respectively. At this time, by the fact that an elastic supporting member which is located at a head of the bolt is brought into contact with an upper surface of the leg part, a gap is not induced between the rotating plate and the leg part.

## Description

### BACKGROUND OF THE INVENTION

### Field of the Invention

The present invention relates to a front seat assembly for a vehicle, and more particularly, the present invention relates to a front seat assembly for a vehicle, which is constructed in such a manner as to prevent a front seat from playing due to the presence of gaps between a pair of leg parts and a rotating plate when loads are exerted to the front seat in a forward and rearward direction and/or in a leftward and rightward direction.

### Description of the Related Art

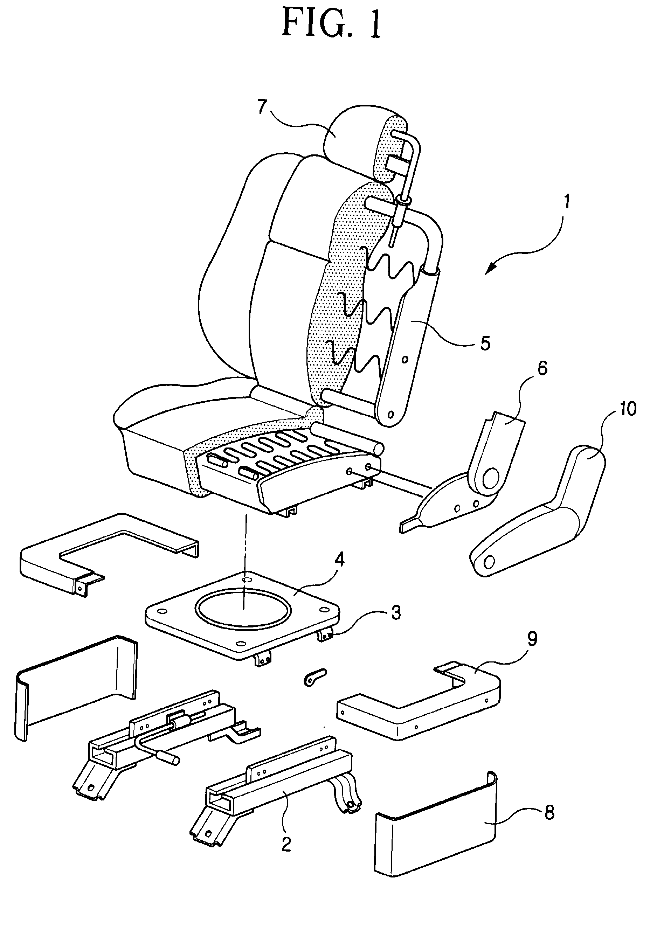

Conventionally, as front seat assemblies for a vehicle, a driver seat assembly and a passenger seat assembly are provided. As shown in FIG. 1, each front seat assembly has a pair of slide rails 2 which are secured to a floor panel of a vehicle body in such a way as to enable a front seat 1 to be pulled forward or pushed rearward depending upon a figure of an occupant seating on the driver seat assembly or the passenger seat assembly. The front seat assembly is provided with a rotating plate 4 which is connected through a pair of leg parts 3 to the pair of slide rails 2, respectively, so that the front seat 1 can be rotated within a predetermined range of angle.

The pair of slide rails 2 have a pair of lower channels which are fastened to the floor panel of the vehicle body by locking means such as bolts or the like in a manner such that the pair of lower channels are separated from each other by a preset distance which corresponds to a width of the front seat 1. Because the rotating plate 4 which is fastened to the front seat 1 is connected through the pair of leg parts 3 to the pair of slide rails 2, respectively, the rotatable front seat 1 can be reciprocated in a forward and rearward direction, along with the rotating plate 4. A knuckle arrangement 6 for adjusting an angle of a seat back 5 is disposed at a side of the front seat 1, and a headrest 7 for supporting an occupant s head is arranged at an upper end of the seat back 5.

The pair of leg parts 3 and the rotating plate 4 are connected with each other by locking means such as bolts or the like. On the other hand, the pair of slide rails 2, the rotating plate 4 and the knuckle arrangement 6 are hidden from the outside by their respective covers 8, 9 and 10, respectively.

However, the front seat assembly for a vehicle according to the conventional art, constructed as mentioned above, suffers from defects in that, since gaps are induced between the pair of leg parts and the rotating plate by loads exerted to the front seat in a forward and rearward direction and/or in a leftward and rightward direction when the front seat is rotated, noise is generated and durability of the front seat assembly is deteriorated due to the presence of the gaps.

### SUMMARY OF THE INVENTION

Accordingly, the present invention has been made in an effort to solve the problems occurring in the related art, and an object of the present invention is to provide a rotatable front seat assembly for a vehicle, which is constructed in such a manner as to prevent noise from being generated and its durability from being deteriorated due to the presence of gaps between a pair of leg parts and a rotating plate, when loads are exerted to a rotatable front seat in a forward and rearward direction and/or in a leftward and rightward direction, with the pair of leg parts connecting the rotating plate to a pair of slide rails.

In order to achieve the above object, according to one aspect of the present invention, there is provided a front seat assembly for a vehicle, comprising: a pair of slide rails secured to a floor panel of the vehicle; a rotating plate supported by a pair of leg parts and connected through the pair of leg parts to the pair of slide rails, respectively; a front seat rotatably supported by the rotating plate; and play preventing means arranged between the rotating plate and each end of the leg part for preventing the front seat from playing.

According to another aspect of the present invention, the play preventing means comprises a bolt passing through a hole which is defined in the rotating plate; a pair of nuts locked to the bolt over and under the rotating plate, respectively; and an elastic supporting member located at a head of the bolt and brought into contact with an upper surface of the leg part.

According to still another aspect of the present invention, the elastic supporting member is made of rubber.

### BRIEF DESCRIPTION OF THE DRAWINGS

The above objects, and other features and advantages of the present invention will become more apparent after a reading of the following detailed description when taken in conjunction with the drawings, in which:
FIG. 1 is an exploded perspective view illustrating a front passenger seat placed at a side of a driver s seat of a vehicle;
FIG. 2 is a plan view for explaining a construction of a front seat assembly for a vehicle, in accordance with an embodiment of the present invention; and
FIG. 3 is a cross-sectional view taken along the line III-III of FIG. 2, illustrating a structure for preventing a front seat from playing.

### DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

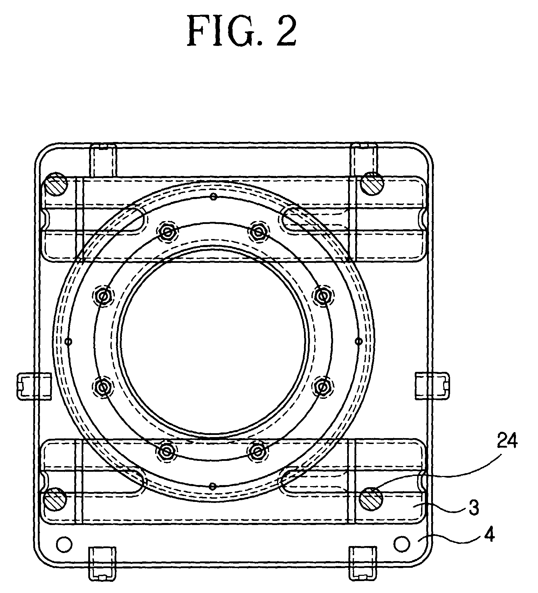

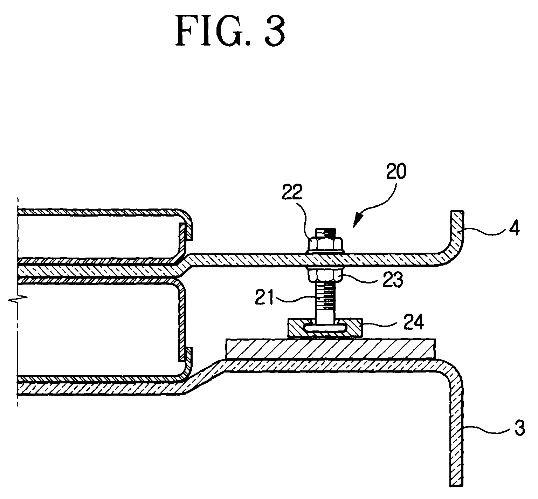

FIG. 2 is a plan view for explaining a construction of a front seat assembly for a vehicle, in accordance with an embodiment of the present invention; and FIG. 3 is a cross-sectional view taken along the line III-III of FIG. 2, illustrating a structure for preventing a front seat from playing. As shown in FIGs. 2 and 3, a front seat assembly for a vehicle according to the present invention is applied to a front seat 1 of the vehicle.

The front seat 1 has a pair of leg parts 3. The pair of leg parts 3 are connected to a pair of slide rails (see FIG. 1), respectively, which are secured to a floor panel of a vehicle body. Due to the fact that a rotating plate 4 is supported by the pair of leg parts 3, the rotating plate 4 is connected through the pair of leg parts 3 to the pair of slide rails, as in the conventional art. In this regard, because the front seat 1 on which a passenger seats is rotatably supported by the rotating plate 4, the front seat 1 can be rotated along with the rotating plate 4.

On the other hand, in the front seat assembly for a vehicle according to the present invention, as can be readily seen from FIG. 3, play preventing means 20 is provided between the rotating plate 4 and each end of the leg part 3 for preventing the front seat 1 from playing by loads exerted thereto. The play preventing means 20 also functions to prevent noise from being generated due to the collision between the rotating plate 4 and each end of the leg part 3, which otherwise occurs due to the presence of a gap between the rotating plate 4 and each end of the leg part 3.

The play preventing means 20 includes a bolt 21 which passes through a hole which in turn is defined in the rotating plate 4, a pair of nuts 22 and 23 which are locked to the bolt 21 over and under the rotating plate 4, respectively, and an elastic supporting member 24 which is located at a head of the bolt 21 and brought into contact with an upper surface of the leg part 3.

After a position of the bolt 21 is adjusted along an upward and downward direction so that a distance between the upper surface of the leg part 3 and the head of the bolt 21 can be altered, the pair of nuts 22 and 23 are locked to the bolt 21 over and under the rotating plate 4, respectively. By this, the bolt 21 can be rigidly supported by the rotating plate 4 at a predetermined height. Accordingly, a load which is exerted to the rotating plate 4 is transferred to the leg part 3 through the bolt 21. At this time, by the fact that the distance between the upper surface of the leg part 3 and the head of the bolt 21 is adequately altered, the play of the front seat 1, which can otherwise occur by the load exerted to the front seat 1, is prevented, whereby noise is not generated due to the presence of the gap.

On the other hand, the elastic supporting member 24 is provided to prevent noise from being generated due to the collision between the bolt 21 and the leg part 3. In view of this, it is preferred that the elastic supporting member 24 is made of material which is soft and is capable of elastically absorbing shock. In other words, the elastic supporting member 24 can be made, for example, of rubber, leather or fabric. Preferably, the elastic supporting member 24 is made of rubber.

As described above, the front seat assembly for a vehicle according to the present invention, constructed as mentioned above, provides advantages in that gaps are not induced between a pair of leg parts and a rotating plate by loads exerted to a front seat in a forward and rearward direction and/or in a leftward and rightward direction when the front seat is rotated, and in that, since an elastic supporting member is provided, noise is not generated and durability of the front seat assembly is not deteriorated.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A front seat assembly for a vehicle, comprising:
a rotating plate supported by a pair of leg parts and connected through the pair of leg parts to a pair of slide rails, respectively, which are secured to a floor panel of the vehicle;
a front seat rotatably supported by the rotating plate; and
play preventing means arranged between the rotating plate and each end of the leg part for preventing the front seat from playing.

2. The front seat assembly as claimed in claim 1, wherein the play preventing means comprises:
a bolt passing through a hole which is defined in the rotating plate;
a pair of nuts locked to the bolt over and under the rotating plate, respectively; and
an elastic supporting member located at a head of the bolt and brought into contact with an upper surface of the leg part.

3. The front seat assembly as claimed in claim 1, wherein the elastic supporting member is made of rubber.
